Europäisches Patentamt

European Patent Office

Office européen des brevets

(19)

(11) Veröffentlichungsnummer: **0 252 469 B1**

(12)

# EUROPÄISCHE PATENTSCHRIFT

(45) Veröffentlichungstag der Patentschrift:
06.02.91 Patentblatt 91/06

(51) Int. Cl.$^5$: **B29C 67/22**, B29C 51/10,
B29C 51/26, // B29L31:58

(21) Anmeldenummer: 87109691.3

(22) Anmeldetag: 06.07.87

(54) **Verfahren und Vorrichtung zum Herstellen von geschäumten Polstern mit einem textilen Überzug, insbesondere von Sitzpolstern für Kraftfahrzeuge.**

(30) Priorität: 09.07.86 DE 3622971

(43) Veröffentlichungstag der Anmeldung:
13.01.88 Patentblatt 88/02

(45) Bekanntmachung des Hinweises auf die
Patenterteilung:
06.02.91 Patentblatt 91/06

(84) Benannte Vertragsstaaten:
AT BE CH DE ES FR GB IT LI NL SE

(56) Entgegenhaltungen:
DE-C- 3 610 128
FR-A- 2 148 105
US-A- 4 114 213

(73) Patentinhaber: BAYER AG
D-5090 Leverkusen 1 Bayerwerk (DE)

(72) Erfinder: Busch, Ralf, Dr.
Andreas-Gryphius Strasse 5
D-5000 Köln 80 (DE)
Erfinder: Onnenberg, Volker, Dipl.-Ing.
Schässburger Gasse 2
D-5276 Drabenderhöhe (DE)

**Beschreibung**

Die Erfindung betrifft ein Verfahren und eine Vorrichtung zum Herstellen von geschäumten Polstern mit einem textilen Überzug, insbesondere von Sitzpolstern für Kraftfahrzeuge, wobei der Überzug in den Formhohlraum eines Formwerkzeuges eingelegt und unter Anwendung von Vakuum der Kontur des Formhohlraumes angepaßt wird, und anschließend ein einen Schaumstoffkern bildendes Reaktionsgemisch eingebracht wird und wobei bewegbare Stege in den Formhohlraum eingegführt werden, wie aus US-A- 4 114 213 bekannt ist.

Das Einbringen des Überzuges in den Formhohlraum ohne unerwünschte Faltenbildung und das konturgetreue Anschmiegen an die Wandung und die Stege des Formhohlraumes sowie gegebenenfalls das Einlegen gewünschter Falten an gewissen Stellen, z.B. den Polsterecken, ist nach wie vor ein Problem geblieben, welches insbesondere bei nicht dehnbaren Überzugsmaterialien auftritt. Aber auch bei dehnbaren Materialien zeigen sich immer wieder Schwierigkeiten, indem es neben unerwünschter Faltenbildung auch zur Überdehnung des Bezuges kommen kann. Überdehnungen treten meist an exponierten Stellen auf, wie Kanten, Stege, Ecken usw., und verursachen vorzeitigen Verschleiß des Polsterüberzuges.

Man hat deshalb schon versucht, neben den üblichen Spannrahmen zum besseren Einführen des Überzuges auch noch einen Oberstempel zu verwenden, mit welchem der Überzug in den Formhohlraum eingedrückt werden soll. Dabei besteht das Risiko einer Beschädigung des Überzuges bzw. einer gegebenenfalls auf dessen Unterseite angeordneten Dichtungsfolie. Wie bei allen Stanz- oder Preßvorrichtungen besteht auch hier beim Herabfahren des Oberstempels die Gefahr von Verletzungen für das Bedienungspersonal. Die exakte Reproduzierbarkeit des Einlegevorganges ist problematisch. Je Formwerkzeug ist ein besonderer Oberstempel erforderlich, weil dieser der Kontur des Formhohlraumes zumindest grob angepaßt werden muß. Nachteilig ist auch, daß infolge des Oberstempels sich der Anschmiegevorgang nicht beobachten läßt.

Es besteht die Aufgabe, die eingangs beschriebene Technik dahin-gehend zu verbessern, daß neben des Vermeidung uneiwünschter Falten auch nach überall ein exahtes Anlegen an die Formhohlraumwandung gewäbeleight ist.

Gelöst wird diese Aufgabe dadurch, daß diese Stege vor dem Einlegen des Überzuges in den Formhohlraum hineingeführt werden und während und-/oder nach der Vakuumverformung des Überzuges wieder zurückbewegt werden.

Durch diese zunächst relativ weit in den Formhohlraum hineinragenden Stege wird stets eine gewisse Spannung des Überzuges bei dessen Einlegen aufrechterhalten. Erst beim Zurückziehen der Stege werden dann die restlichen, zwischen Formhohlraumwandung und Überzug verbliebenen Hohlräume durch das Ansaugen und Zurückbewegen der Stege verdrängt, so daß sich die Formhohlraumwandung sowie die Stege gemäß ihrer Endstellung später auf dem fertigen Polster formgetreu abzeichnen. Gemäß US-A- 4 114 213 werden die Stege im gegensatz hierzu erst eingeschoben, nachdem des Überzug durch kakunen in den Formhohlraum eingesangt werden ist. Es versteht sich von selbst, daß die Dimensionierung der Stege, ihr Bewegungsgrad sowie ihre Bewegungsgeschwindigkeit von vielen zu berücksichtigenden Faktoren abhängig sind, wie Größe des Formteils, Steifigkeit bzw. Dehnfähigkeit des Überzuges, Stärke des angelegten Vakuums, Reibung an der Formwandung, Verwendung eines Spannrahmens usw. Der Fachmann kennt zwar aufgrund seines Fachwissens gewisse Tendenzen, die er bei der Auslegung des Formwerkzeuges bzw. bei der Planung des Verfahrens von vornherein berücksichtigen kann ; eine Optimierung, insbesondere bei geometrisch schwierig geformten Polstern ist letztlich erst durch Versuche möglich. Bei Vorhandensein genügender Erfahrungswerte läßt sich später eine Optimierung für neue Anwendungsfälle unter Zuhilfenahme eines Rechners durchführen. Die Stege weisen beispielsweise die Form von flachen Platten auf; sie können sogar in gewissen Grenzen räumlich konturiert sein und/oder eine gewisse Elastizität besitzen.

Nach einer besonderen Durchführungsform des Verfahrens werden die Stege so lange zurückbewegt, bis der Überzug im wesentlichen drucklos auf diesen Stegen ruht.

Es hat sich nämlich gezeigt, daß in der Regel der Moment der optimalen Konturanpassung gegeben ist, wenn der Überzug nicht mehr auf die Oberkante der Stege drückt. Ein geringfügiges zu weites Zurückführen der Stege bringt keine Nachteile mit sich, da normalerweise die Steifigkeit des Überzuges die Kontur auch ohne vollständige Unterstützung fixiert.

Die Bewegung der Stege erfolgt gemäß einer weiteren Verfahrensvariante linear und/oder um eine Achse.

Welche Bewegungsart gewählt wird, hängt davon ab, welche im speziellen Falle das bessere Endresultat gewährleistet. Insbesondere zum beabsichtigten Einlegen von Falten an den Ecken des zu fertigenden Polsters, wo Überschuß an Überzugsmaterial vorhanden ist, lassen sich bevorzugt um eine Querachse schwenkbare Stege anwenden.

Es versteht sich, daß die Stege einzeln, gruppenweise, gleichzeitig oder zeitversetzt und mit gleicher oder unterschiedlicher Geschwindigkeit bewegbar sein können. Auch hier wird der Fachmann entsprechend der Geometrie des Formteils jeweils die optimalen Bedingungen aufgrund seiner Erfahrung und durch Versuche auswählen müssen.

Gemäß einer weiteren Durchführungsform des Verfahrens werden röhrenförmige Hohlräume eingeformt.

Derartige Hohlräume dienen der besseren Belüftung des Polsters, bei entsprechender Geometrie und Anordnung auch der Schaffung von Zonen verschiedener Nachgiebigkeit, wodurch der Sitzkomfort verbessert wird. Wegen der Hinterschneidungen läßt sich zwar ein solches Polster schlechter entformen ; grundsätzliche Schwierigkeiten bestehen wegen der Nachgiebigkeit bei Weichschaumstoffkernen jedoch nicht.

Die Vorrichtung zum Herstellen von geschäumten Polstern mit einem Überzug, insbesondere von Sitzpolstern für Kraftfahrzeuge, geht aus von einem Mischkopf und einem Formwerkzeug, dessen Formhohlraum über Saugöffnungen mit einem Vakuumerzeuger verbindbar ist und bewegbare Stege aufweist.

Das Neue ist darin zu sehen, daß den Stegen ein gemeinsamer Bewegungsmechanismus zugeordnet ist.

Während die bisher bekannten starr angeordneten Stege lediglich die Aufgabe der Konturierung besaßen, kommt den bewegbaren Stegen darüber hinaus noch die Aufgabe zu, ein besseres, konturgetreues Einlegen des Überzuges in den Formhohlraum zu gewährleisten. Zu diesem Zweck können auch Stege vorgesehen sein, denen keine Konturierungsaufgabe zukommt, indem sie so weit absinkbar sind, daß sie mit der Formhohlraumwandung bzw. dem Formhohlraumboden eine Fläche bilden. Es versteht sich, daß in üblicher Weise auch ein zusätzlicher Spannrahmen zum Einführen des Überzuges vorgesehen sein kann, falls dies vorteilhaft erscheint. Der Bewegungsmechanismus arbeitet vorzugsweise hydraulisch ; aber auch pneumatisch, mechanisch oder elektromagnetisch arbeitende Bewegungsmechanismen sind denkbar.

Vorzugsweise ist zur gemeinsamen, gruppenweisen oder einzelnen Bewegbarkeit der Stege der Bewegungsmechanismus mit einem Steuergerät gekoppelt.

Auf diese Weise kann der Einlegevorgang des Überzuges hinsichtlich der Bewegung der Stege nach einem vorgegebenen Programm ablaufen.

Die Stege sind vorzugsweise durch in der Wandung des Formwerkzeuges angeordnete Schlitze geführt.

Unter "Wandung" ist hier auch der Boden des Formwerkzeuges zu verstehen. Soweit möglich, sollte der Bewegungsmechanismus der Stege in dem dem Formwerkzeug zugeordneten Saugkasten angeordnet sein, denn dann bedarf es keiner besonderen Abdichtung. Gerade im Bereich der Stege ist nämlich das Vorhandensein von Saugöffnungen erwünscht, so daß die Schlitze gleichzeitig als Saugöffnungen dienen können.

Die Stege sind linear geführt, gelagert und/oder sie sind auf einer Schwenkachse gelagert. Das heißt, auch eine Kombination zwischen linear geführter Lagerung und Schwenklagerung ist möglich. Die Schwenkachsen können dabei quer oder in Längsrichtung der Stege vorgesehen sein,

In besonderen Fällen sind die Stege im Formhohlraum um eine Längsachse schwenkbar gelagert.

Diese Schwenkbarkeit um eine Längsachse erlaubt beim Bewegen des Steges eine flächenhafte Abstützung des Überzuges, wohingegen bei der linearen Bewegbarkeit oder bei der Bewegbarkeit um eine Querachse die Abstützung nahezu linienförmig erfolgt. Die dem Überzug zugewandte Fläche des Steges ist dabei vorzugsweise konturiert.

Vorzugsweise weist bei dieser Ausführungsform der Formhohlraum zur mindestens teilweisen Aufnahme der Stege den Stegen angepaßte Vertiefungen auf.

Auf diese Weise können die Stege der Kontur des Formhohlraumes durch Herabklappen angepaßt werden.

Nach einer besonderen Ausführungsform sind die Kanten der Stege mit einem Konturprofil versehen.

Dieses Konturprofil besteht beispielsweise aus einer Anfasung, einer Abrundung oder einer Verstärkung mit kreisförmigem oder ovalem Querschnitt. Mit Hilfe solcher Verstärkungen werden Lüftungskanäle im Sitzpolster erzeugt. Bei kleineren Verstärkungsquerschnitten lassen sich steife Materialien verwenden ; bei größeren Querschnitten kann es günstiger sein, schlauchartige, aufpumpbare Gebilde vorzusehen, welche zur besseren Entformbarkeit des gefertigten Polsters vor dem Entformen entleert werden.

Gemäß einer weiteren besonderen Ausführungsform sind auf den oberen Kanten der Stege Walzen angeordnet.

Diese Walzen bieten den Vorteil, daß der Überzug bei der Vakuumverformung auf diesen Walzen abrollt, also nur wenig Reibung vorhanden ist. Dadurch wird das konturgerechte Anschmiegen begünstigt.

Es versteht sich auch, daß im Formhohlraum teils auch fixe Stege angeordnet sein können, und zwar insbesondere an solchen Stellen, wo sich aufgrund der Geometrie der Überzug ohne Komplikationen glatt anlegt.

Schließlich ist es zur Vermeidung vieler kleiner Falten an den Ecken des Polsters oft schon ausreichend, in jeder Ecke einen fixen Steg anzuordnen, so daß jeweils eine tiefe Falte eingelegt wird.

Gemäß einer weiteren besonderen Ausführungsform ist den Stegen eine Klemmvorrichtung zugeordnet, welche von beiden Seiten jeweils gegen den Steg wirkende Klemmbacken aufweist.

Mittels dieser Klemmbacken kann man den Überzug vorfixieren bzw. an die Stege anlegen. Nach dem anschließenden Anlegen des Vakuums entfernt man die Klemmvorrichtung wieder, damit das schaumfähige Reaktionsgemisch in den Formhohlraum eingetragen werden kann.

Es ist möglich, die Vorrichtung so zu gestalten, daß die Stege samt Bewegungsmechanismus und gegebenenfalls Saugkasten für mehrere austauschbare Formwerkzeuge verwendbar sind, indem man die besagten Teile an einer Formwerkzeugschließe anordnet.

Diese Ausführungsform ist insbesondere dann von Vorteil, wenn bei längeren Aushärtezeiten des aufschäumenden Reaktionsgemisches ein gefülltes Formwerkzeug bereits im frühen Aushärtestadium des Schaumstoffes abgenommen und ein anderes auf die Stege aufgesetzt werden kann. Auf diese Weise wird der apparative aufwand gering gehalten bzw. Zeit eingespart. Es versteht sich, daß auch jedes Formwerkzeug seine eigenen Stege samt Bewegungsmechanismus und Steuergerät besitzen kann. Welche Ausführungsform man wählt, ist eine Frage der Wirtschaftlichkeit für den jeweiligen Anwendungsfall.

In der Zeichnung ist die neue Vorrichtung in mehreren Ausführungsbeispielen rein schematisch dargestellt und nachstehend näher erläutert. Es zeigen :

Fig. 1 die Vorrichtung gemäß einem ersten Ausführungsbeispiel im Schnitt,
Fig. 2 die Vorrichtung gemäß einem zweiten Ausführungsbeispiel in der Draufsicht,
Fig. 3 die Vorrichtung im Schnitt gemäß Linie A-B in Fig. 2,
Fig. 4 die Vorrichtung gemäß einer dritten Ausführungsform im Schnitt,
Fig. 5 die Vorrichtung gemäß einem vierten Ausführungsbeispiel im Schnitt und
Fig. 6 eine besondere Ausführungsform der Stege.

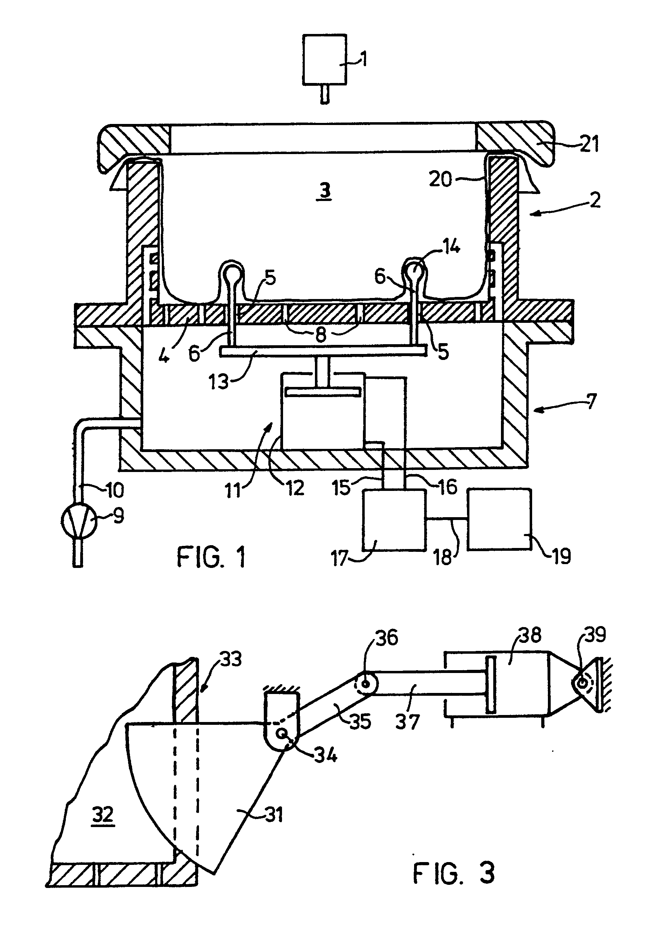

In Fig. 1 besteht die Vorrichtung aus einem angedeuteten Mischkopf 1, welcher über einem Formwerkzeug 2 angeordnet ist. Der Mischkopf 1 ist Teil einer nicht dargestellten Mischvorrichtung, welche außerdem Vorratsbehälter, von denen Zuleitungen über Dosierpumpen zum Mischkopf 1 führen, umfaßt. Das Formwerkzeug 2 weist einen Formhohlraum 3 auf. Der Boden 4 des Formwerkzeuges 2 ist mit Schlitzen 5 versehen, durch welche Stege 6 in den Formhohlraum 3 hineinweisen. Unterhalb des Formwerkzeuges 2 ist ein Absaugkasten 7 angeordnet, welcher mit dem Formhohlraum 3 über die Schlitze 5 und weitere Ansaugöffnungen 8 in Verbindung steht. An den Absaugkasten 7 ist eine zu einem Vakuumerzeuger 9 führende Absaugleitung 10 angeschlossen. Im Absaugkasten 7 sind Teile eines Bewegungsmechanismus 11 für die Stege 6 gelagert. Er besteht aus einer hydraulisch arbeitenden Kolben-Zylinder-Einheit 12, welche eine Platte 13 bewegt, auf welcher in den Schlitzen 5 die linear geführten Stege 6 fest gelagert sind. Die oberen Kanten der Stege 6 sind mit Konturprofilen 14 versehen, welche Kreisquerschnitt bzw. ovalen Querschnitt aufweisen. Zum Bewegungsmechanismus 11 gehören Hydraulikleitungen 15, 16, welche mit einer als Block 17 angedeuteten Hydraulikstation verbunden sind. Die Hydraulikstation 17 ist über eine Impulsleitung 18 mit einem Steuergerät 19 gekoppelt. In den Formhohlraum 3 ist ein textiler Überzug 20 eingelegt, für dessen Einführung ein auf das Formwerkzeug 2 aufgesetzter Spannrahmen 21 vorgesehen ist. Nach dem Einbringen des Reaktionsgemisches, welches aus Polyol und Isocyanat Polyurethanweichschaumstoff bildet, wird das Formwerkzeug mit einer nicht dargestellten oberen Formhälfte verschlossen und erst nach dem Aushärten des Schaumstoffkernes wieder geöffnet.

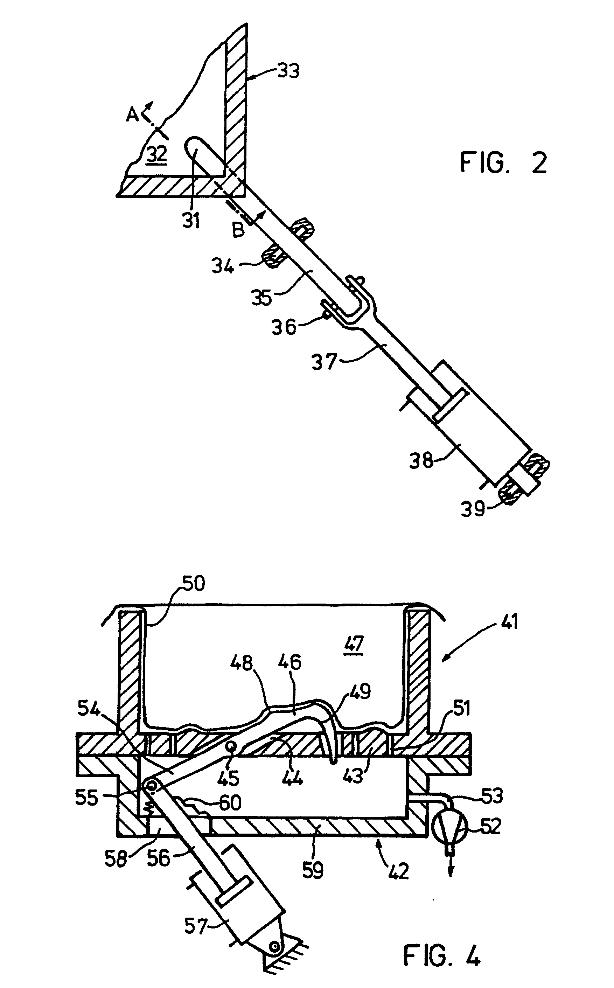

In Fig. 2, 3 ragt ein kreissegmentartig geformter Steg 31 unter einem Winkel von 45° von der Seite her in die Ecke des Formhohlraumes 32 eines angedeuteten Formwerkzeuges 33 hinein. Dieser Steg 31 ist um eine fixe Querachse 34 schwenkbar gelagert. Jenseits der Querachse 34 läuft der Steg 31 in einen Hebel 35 aus, dessen Ende über ein Gelenk 36 mit einer Kolbenstange 37 einer hydraulischen Kolben-Zylinder-Einheit 38 verbunden ist. Letztere ist mittels einer fixen Achse 39 schwenkbar gelagert. Auf die Darstellung weiterer, leicht vorstellbarer Details wurde hier der besseren Übersichtlichkeit halber verzichtet.

In Fig. 4 besteht die Vorrichtung aus einem Formwerkzeug 41, unter welchem ein Absaugkasten 42 angeordnet ist.

Im Boden 43 des Formwerkzeuges 41 ist in einer Vertiefung 44 ein um eine Längsachse 45 schwenkbarer Steg 46 angeordnet. (Die größte Ausdehnung des Steges geht in die Zeichnungsebene hinein). Auf der dem Formhohlraum 47 zugewandten Seitenfläche weist der Steg 46 eine Konturierung 48 auf. Am Ende des Steges 46 ist ein bogenförmiges Blech 49 angeordnet, wodurch vermieden wird, daß der eingelegte Überzug 50 beim Zurückbewegen des klappenartigen Steges 46 zwischen diesem und dem Boden 43 eingeklemmt wird. Der Boden 43 ist mit Absaugöffnungen 51 versehen. An den Absaugkasten 42 ist eine zu einem Vakuumerzeuger 52 führende Absaugleitung 53 angeschlossen. Der jenseits der fixen Achse 45 befindkiche Abschnitt des Steges 46 ist als Hebel 54 ausgebildet und ist über ein Gelenk 55 mit der Kolbenstange 56 einer schwenkbar gelagerten hydraulischen Kolben-Zylinder-Einheit 57 verbunden. Die Kolbenstange 56 ist durch eine Öffnung 58 im Boden 59 des Absaugkastens 42 geführt und mittels eines Faltenbalges 60 abgedichtet.

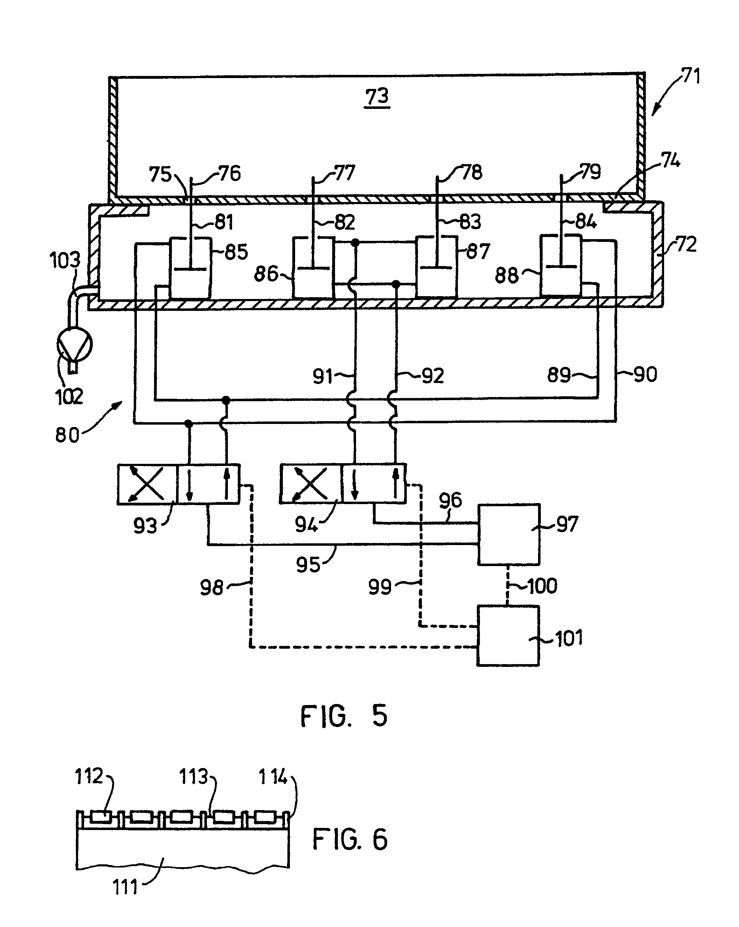

In Fig. 5 besteht die Vorrichtung aus einem Formwerkzeug 71, einem Absaugkasten 72, in den Formhohlraum 73 durch im Boden 74 des Formwerkzeuges 71 vorhandene Schlitze 75 hineinragende Stege 76, 77, 78, 79, einem diesen Stegen 76, 77, 78, 79 zugeordneten Bewegungsmechanismus 80 sowie einem Steuergerät 101. Die Stege 76, 77, 78, 79 gehen in Kolbenstangen 81, 82, 83, 84 von hydraulischen Kolben-Zylinder-Einheiten 85, 86, 87, 88 über. Diese sind auf dem-Boden 74 des Absaugkastens 72 angeordnet. Die Stege 76, 79 mit den Kolben-Zylinder-Einheiten 85, 88 sowie die Stege 77, 78 mit den Kolben-Zylinder-Einheiten 86, 87 bilden jeweils eine unabhängige Gruppe, indem jede Gruppe über Hydraulikleitungen 89, 90 bzw. 91, 92 mit einem gesonderten Steuerventil 93, 94 verbunden ist. Jedes dieser Steuerventile 93, 94 ist über Hydraulikleitungen 95, 96 mit einer als Block dargestellten, im wesentlichen aus einer Hydraulikpumpe und einem Hydraulikreservoir bestehenden Hydraulikstation 97 verbunden. Die Steuerventile 93, 94 sowie die Hydraulikstation 97 sind außerdem über Impulsleitungen 98, 99, 100 mit einem Steuergerät 101 verbunden. Ein Vakuumerzeuger ist mit 102 und die von dem Absaugkasten 72 zu diesem führende Absaugleitung mit 103 bezeichnet.

In Fig. 6 ist die obere Kante eines Steges 111 mit Walzen 112 versehen, welche mittels Achsen 113 in Lagern 114 gehalten wird.

## Ansprüche

1. Verfahren zum Herstellen von geschäumten Polstern mit einem textilen Überzug (20, 50), insbesondere von Sitzpolstern für Kraftfahrzeuge, wobei der Überzug (20, 50) in den Formhohlraum (3, 32, 47, 73) eines Formwerkzeuges (2, 33, 41, 71) eingelegt und unter Anwendung von Vakuum der Kontur des Formhohlraumes (3, 32, 47, 73) angepaßt wird und anschließend ein einen Schaumstoffkern bildendes Reaktionsgemisch eingebracht wird und wobei bewegbare Stege (6, 31, 46, 76, 77, 78, 79) in den Formhohlraum (3, 32, 47, 73) eingeführt werden, dadurch gekennzeichnet, daß diese Stege (6, 31, 46, 76, 77, 78, 79) vor dem Einlegen des Überzuges (20, 50) in den Formhohlraum (3, 32, 47, 73) hineingeführt werden und während und/oder nach der Vakkuumverformung des Überzuges (20, 50) wieder zurückbewegt werden.

2. Verfahren nach Anspruch 1, dadurch gekennzeichnet, daß die Stege (6, 31, 46, 76, 77, 78, 79) so lange zurückbewegt werden, bis der Überzug (20, 50) im wesentlichen drucklos auf diesen Stegen (6, 31, 46, 76, 77, 78, 79) ruht.

3. Verfahren nach Anspruch 1 oder 2, dadurch gekennzeichnet, daß die Bewegung der Stege (6, 76, 77, 78, 79) linear erfolgt.

4. Verfahren nach Anspruch 1 oder 2, dadurch gekennzeichnet, daß die Bewegung der Stege (31, 46) um eine Achse (34, 45) erfolgt.

5. Verfahren nach einem der Ansprüche 1 bis 4, dadurch gekennzeichnet, daß röhrenförmige Hohlräume eingeformt werden.

6. Vorrichtung zum Herstellen von geschäumten Polstern mit einem Überzug (20, 50), insbesondere von Sitzpolstern für Kraftfahrzeuge, bestehend aus einem Mischkopf (1) und aus einem Formwerkzeug (2, 33, 41, 71), dessen Formhohlraum (3, 32, 47, 73) über Absaugöffnungen (8, 51) mit einem Vakuumerzeuger (9, 56, 101) verbindbar ist und bewegbare Stege (6, 31, 46, 76, 77, 78, 79) aufweist, dadurch gekennzeichnet, daß den Stegen (6, 31, 46, 76, 77, 78, 79) ein gemeinsamer Bewegungsmechanismus (11, 80) zugeordnet ist.

7. Vorrichtung nach Anspruch 6, dadurch gekennzeichnet, daß zur gemeinsamen, gruppenweisen oder einzelnen Bewegbarkeit der Stege (6, 31, 46, 76, 77, 78, 79) der Bewegungsmechanismus (11, 80) mit einem Steuergerät (19, 101) gekoppelt ist.

8. Vorrichtung nach den Ansprüchen 6 bis 7, dadurch gekennzeichnet, daß die Stege (6, 31, 46, 76, 77, 78, 79) durch in der Wandung bzw. im Boden (4, 43, 74) des Formwerkzeuges (2, 33, 41, 71) angeordnete Schlitze (5, 75) geführt sind.

9. Vorrichtung nach einem der Ansprüche 6 bis 8, dadurch gekennzeichnet, daß die Stege (36, 76, 77, 78, 79) linear geführt sind.

10. Vorrichtung nach einem der Ansprüche 6 bis 9, dadurch gekennzeichnet, daß die Stege (31, 46) auf einer Schwenkachse (34, 35) gelagert sind.

11. Vorrichtung nach Anspruch 10, dadurch gekennzeichnet, daß die Stege (46) im Formhohlraum (47) um eine Längsachse (45) schwenkbar gelagert sind.

12. Vorrichtung nach Anspruch 11, dadurch gekennzeichnet, daß der Formhohlraum (47) zur mindestens teilweisen Aufnahme der Stege (46) den Stegen (46) angepaßte Vertiefungen (44) aufweist.

13. Vorrichtung nach einem der Ansprüche 6 bis 12, dadurch gekennzeichnet, daß die Kanten der Stege (6) mit einem Konturprofil (14) versehen sind.

14. Vorrichtung nach einem der Ansprüche 6 bis 12, dadurch gekennzeichnet, daß die Kanten der Stege (111) mit Walzen (112) versehen sind.

15. Vorrichtung nach einem der Ansprüche 6 bis 14, dadurch gekennzeichnet, daß in den Ecken des Formhohlraumes fixe Stege angeordnet sind.

16. Vorrichtung nach einem der Ansprüche 6 bis 15, dadurch gekennzeichnet, daß den Stegen eine Klemmvorrichtung zugeordnet ist, welche von beiden Seiten jeweils gegen den Steg wirkende Klemmbacken aufweist.

## Revendications

1. Procédé pour la fabrication de rembourrages en mousse munis d'un revêtement textile (20, 50), en particulier, de rembourrages pour sièges de véhicules automobiles, par lequel on introduit le revêtement (20, 50) au sein de la cavité de formage (3, 32, 47, 73) d'un outil destiné à cet effet (2, 33, 41, 71) et on l'adapte aux contours de la cavité de formage (3, 32, 47, 73) par application de vide et ensuite, on incorpore un mélange réactionnel formant un noyau alvéolaire et, par lequel on guide des pattes mobiles (6, 31, 46, 76, 77, 78, 79) au sein de la cavité de formage (3, 32, 47, 73), **caractérisé en ce qu'**on guide ces pattes (6, 31, 46, 76, 77, 78, 79) au sein de la cavité de formage (3, 32, 47, 73) avant d'y introduire le revêtement (20, 50) et on les en retire à nouveau pendant et/ou après avoir procédé au formage sous vide du revêtement (20, 50).

2. Procédé selon la revendication 1, **caractérisé en ce qu'**on retire les pattes (6, 31, 46, 76, 77, 78, 79) jusqu'à ce que le revêtement (20, 50) repose sur ces pattes (6, 31, 46, 76, 77, 78, 79) essentiellement sans pression.

3. Procédé selon la revendication 1 ou 2, **caractérisé en ce que** le mouvement des pattes (6, 76, 77, 78, 79) est un mouvement linéaire.

4. Procédé selon la revendication 1 ou 2, **caractérisé en ce que** le mouvement des pattes (31, 46) s'effectue autour d'un axe (34, 45).

5. Procédé selon l'une quelconque des revendications 1 à 4, **caractérisé en ce qu'**on façonne des cavités tubulaires.

6. Dispositif destiné à la fabrication de rembourrages en mousse munis d'un revêtement (20, 50), en particulier, de rembourrages pour sièges de véhicules automobiles, constitué par une tête de mélange (1) et par un outil de formage (2, 33, 41, 71) dont la cavité de formage (3, 32, 47, 73) peut être raccordée à une source de vide (9, 56, 101) par l'intermédiaire d'ouvertures d'aspiration (8, 51) et qui présente des pattes mobiles (6, 31, 46, 76, 77, 78, 79), **caractérisé en ce qu'**aux pattes (6, 31, 46, 76, 77, 78, 79) est attribué un mécanisme de déplacement commun (11, 80).

7. Dispositif selon la revendication 6, **caractérisé en ce que,** pour le déplacement commun, par groupes ou individuel des pattes (6, 31, 46, 76, 77, 78, 79) on couple le mécanisme de déplacement (11, 80) à un appareil de commande (19, 101).

8. Dispositif selon les revendications 6 et 7, **caractérisé en ce que** les pattes (6, 31, 46, 76, 77, 78, 79) sont guidées à travers des fentes (5, 75) pratiquées dans la paroi ou dans le fond (4, 43, 74) de l'outil de formage (2, 33, 41, 71).

9. Dispositif selon l'une quelconque des revendications 6 à 8, **caractérisé en ce que** le guidage des pattes (6, 76, 77, 78, 79) est linéaire.

10. Dispositif selon l'une quelconque des revendications 6 à 9, **caractérisé en ce que** les pattes (31, 46) sont montées sur un axe pivotant (34, 35).

11. Dispositif selon la revendication 10, **caractérisé en ce que** les pattes (46) sont montées, au sein de la cavité de formage (47), en pivotement autour d'un axe longitudinal (45).

12. Dispositif selon la revendication 11, **caracté-**

risé en ce que la cavité de formage (47) présente des renfoncements (44) adaptés aux pattes (46), dans lesquels viennent se loger au moins en partie les pattes (46).

13. Dispositif selon l'une quelconque des revendications 6 à 12, **caractérisé en ce que** les arêtes des pattes (6) sont munies d'un profil (14).

14. Dispositif selon l'une quelconque des revendications 6 à 12, **caractérisé en ce que** les arêtes des pattes (111) sont munies de rouleaux (112).

15. Dispositif selon l'une quelconque des revendications 6 à 14, **caractérisé en ce qu'**on dispose des pattes fixes dans les coins de la cavité de formage.

16. Dispositif selon l'une quelconque des revendications 6 à 15, **caractérisé en ce qu'**aux pattes est attribué un dispositif de serrage qui présente, de chaque côté, des mâchoires de serrage agissant, à l'encontre de la patte.

## Claims

1. Process for the production of foamed cushions with a textile covering (20, 50), especially of seat cushions for motor vehicles, in which the covering (20, 50) is inserted into the cavity (3, 32, 47, 73) of a mould (2, 33, 41, 71) and, by the use of vacuum, fitted to the outline of the cavity (3, 32, 47, 73) and subsequently a reaction mixture forming a foamed core is charged and in which movable stays (6, 31, 46, 76, 77, 78, 79) are introduced into the mould cavity (3, 32, 47, 73), characterized in that before the insertion of the covering (20, 50) these stays (6, 31, 46, 76, 77, 78, 79) are led into the mould cavity (3, 32, 47, 73) and during and/or after the vacuum forming of the covering (20, 50) moved back again.

2. Process according to claim 1, characterized in that the stays (6, 31, 46, 76, 77, 78, 79) are moved back until the covering (20, 50) rests essentially without pressure on these stays (6, 31, 46, 76, 77, 78, 79).

3. Process according to claim 1 or 2, characterized in that the movement of the stays (6, 76, 77, 78, 79) occurs linearly.

4. Process according to claim 1 or 2, characterized in that the movement of the stays (31, 46) occurs about an axis (34, 45).

5. Process according to one of claims 1 to 4, characterized in that tubular cavities are moulded in.

6. Apparatus for the production of foamed cushions with a covering (20, 50), especially of seat cushions for motor vehicles, consisting of a mixing head (1) and a mould (2, 33, 41, 71) whose cavity (3, 32, 47, 73) can be connected via suction oprnings (8, 51) with a vacuum generator (9, 56, 101) and has movable stays (6, 31, 46, 76, 77, 78, 79), characterizes in that a common moving mechanism (11, 80) is coordinated with the stays (6, 31, 46, 76, 77, 78, 79).

7. Apparatus according to claim 6, characterized in that for movability of the stays (6, 31, 46, 76, 77, 78, 79) together, in groups or individually the moving mechanism (11, 80) is coupled with a control apparatus (19, 101).

8. Apparatus according to claims 6 to 7, characterized in that the stays (6, 31, 46, 76, 77, 78, 79) are led through slits (5, 75) disposed in the wall or in the bottom (4, 43, 74) of the mould (2, 33, 41, 71).

9. Apparatus according to one of claims 6 to 8, characterized in that the stays (36, 76, 77, 78, 79) are led linearly.

10. Apparatus according to one of claims 6 to 9, characterized in that the stays (31, 46) are mounted on a swivel axis (34, 35).

11. Apparatus according to claim 10, characterized in that the stays (46) are mounted in the mould cavity (47) swivelling about a longitudinal axis (45).

12. Apparatus according to claim 11, characterized in that for at least partial acceptance of the stays (46) the mould cavity (47) has recesses (44) adapted to the stays (46).

13. Apparatus according to one of claims 6 to 12, characterized in that the edges of the stays (6) are provided with an outline profile.

14. Apparatus according to one of claims 6 to 12, characterized in that the edges of the stays (111) are provided with rollers (112).

15. Apparatus according to one of claims 6 to 14, characterized in that fixed stays are disposed in the corners of the mould cavity.

16. Apparatus according to one of claims 6 to 15, characterized in that with the stays is coordinated a clamping device which has jaws acting on the stay from both sides in each case.

FIG. 1

FIG. 3

FIG. 2

FIG. 4

FIG. 5

FIG. 6